(19)

Europäisches
Patentamt
European
Patent Office
Office européen
des brevets

(11)     **EP 3 614 181 B1**

(12)                       **EUROPEAN PATENT SPECIFICATION**

(45) Date of publication and mention
of the grant of the patent:
**20.11.2024  Bulletin 2024/47**

(21) Application number: **17906084.3**

(22) Date of filing: **28.08.2017**

(51) International Patent Classification (IPC):
*G01T 1/20* $^{(2006.01)}$        *G01T 1/208* $^{(2006.01)}$

(52) Cooperative Patent Classification (CPC):
**G01T 1/208; G01T 1/20**

(86) International application number:
**PCT/CN2017/099238**

(87) International publication number:
**WO 2018/192151 (25.10.2018 Gazette 2018/43)**

(54) **METHOD FOR FITTING DIGITIZED SCINTILLATION PULSE SIGNALS**

VERFAHREN ZUM ANPASSEN VON DIGITALISIERTEN SIGNALEN VON
SZINTILLATIONSIMPULSEN

PROCÉDÉ D'AJUSTEMENT DE SIGNAUX NUMÉRISÉS D'IMPULSION DE SCINTILLATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **17.04.2017  CN 201710247652**

(43) Date of publication of application:
**26.02.2020  Bulletin 2020/09**

(73) Proprietor: **Raycan Technology Co., Ltd. (Suzhou)
Suzhou New District
Suzhou, Jiangsu 215163 (CN)**

(72) Inventors:
• **CAO, Wencai
Suzhou, Jiangsu 215163 (CN)**
• **WANG, Shuai
Suzhou, Jiangsu 215163 (CN)**
• **XIE, Qingguo
Suzhou, Jiangsu 215163 (CN)**

(74) Representative: **Grauel, Andreas
Grauel IP
Patentanwaltskanzlei
Wartbergstrasse 14
70191 Stuttgart (DE)**

(56) References cited:
EP-A1- 2 700 360          CN-A- 102 262 238
CN-A- 103 969 675        CN-A- 104 599 302
CN-A- 105 824 817        CN-A- 107 024 711
US-A1- 2003 057 375

• MCFEE J E ET AL: "Comparison of model fitting
and gated integration for pulse shape
discrimination and spectral estimation of
digitized lanthanum halide scintillator pulses",
NUCLEAR INSTRUMENTS & METHODS IN
PHYSICS RESEARCH. SECTION A, vol. 828, 12
May 2016 (2016-05-12), pages 105 - 115,
XP029572618, ISSN: 0168-9002, DOI:
10.1016/J.NIMA.2016.04.116
• DENG ZHENZHOU ET AL: "Empirical Bayesian
energy estimation for multi-voltage threshold
digitizer in PET", 2013 IEEE NUCLEAR SCIENCE
SYMPOSIUM AND MEDICAL IMAGING
CONFERENCE (2013 NSS/MIC), IEEE, 27 October
2013 (2013-10-27), pages 1 - 5, XP032601158, DOI:
10.1109/NSSMIC.2013.6829196

## Description

## FIELD OF THE INVENTION

The present application belongs to the field of signal processing for medical instruments, and in particular relates to a computer-implemented method for fitting digitized scintillation pulse signals.

## BACKGROUND OF THE INVENTION

PET (Positron Emission Tomography) is used to obtain the distribution of tracers labeled by positron nuclide in the human body by capturing gamma-ray photons emitted by positron annihilation in the human body, and then to acquire the pathology and physiology characteristics of organ function, metabolism and etc. The accuracy of acquiring the energy, position and time information carried by gamma photons directly affects the performance of system imaging. Scintillation detectors are used to capture high-energy particles (such as gamma and X particles) and to measure corresponding energy deposition information. They are widely used in the field of radiation detection and imaging because of their high detection efficiency, fast time response and accurate information measurement. Scintillation detectors usually comprise scintillator (such as BGO, LYSO, LaBr, etc.) and photoelectric converter (such as PMT, SiPM, APD, etc.). The incident particles, such as gamma and X particles, interact with scintillator to generate fluorescence which is then converted into corresponding scintillation pulses by the photoelectric converters. While the scintillation pulse is digitized, the digitalized scintillation pulse is analyzed by digital signal processing technology to extract the energy deposition information of particles. By further analyzing the digitalized scintillation pulse, optimizing and upgrading processing algorithm, the accuracy of extracting the energy deposition information of particles can be continuously improved and so do the performance of the scintillation detectors, thus the imaging quality of PET system can be improved.

One method for digitalized scintillation pulse sampling is a Multi-Voltage Threshold (MVT) sampling method. According to the method, the several voltage thresholds are set reasonably on the basis of the characteristics of scintillation pulses, and finally the digitalized scintillation pulse sampling is realized by digitalizing the time for the scintillation pulses to go beyond the voltage threshold. Using a small number of threshold comparators and time-to-digital converters (TDC), the corresponding MVT sampling circuit can thus be designed to make a MVT sampling on scintillation pulses and to obtain the corresponding digitalized scintillation pulses. MVT method is used to digitalize scintillation pulses and to extract energy deposition information of particles, and has the advantages of excellent performance, simple engineering implementation and low hardware cost, etc. The existing research shows that the precise acquisition of energy deposition information of particles can be achieved by using digitalized scintillation pulses acquired by the MVT sampling circuit with 3 to 8 thresholds and the digitalized pulse analysis method based on priori shape information of scintillation pulses.

One of the existing digitalized pulse analysis methods is least square algorithms, which includes Newton method, gradient method and so on. However, most of the existing least square algorithms take a long time to fit the digitized scintillation pulse signals obtained by the PET system plus a large number of scintillation pulses, which leads to inefficiency in practical processing and the time consumed from data acquisition to medical image acquisition too long to meet the industrial needs. In addition, these algorithms have certain limitations in use, and cannot achieve a satisfactory balance in stability and accuracy. In addition, some of the fitting algorithms use the idea of least square and select two parameters in a double-exponential model for fitting, to get certain time efficiency at the expense of pulse integrity. However, the obtained scintillation pulse time and energy information are not accurate enough, which finally leads to certain deterioration in the time resolution and energy resolution of the PET system.

Levenberg-Marquardt method is one of the most optimal algorithms and the most widely used nonlinear least square iteration algorithm. It is a non-linear optimization method between Newton method and gradient descent method, which uses gradient to find the maximum (minimum) value and has the advantage of both gradient method and Newton method. Thus, it has a wide range of applications, such as economics, management optimization, network analysis, optimal design, mechanical or electronic design and so on. Therefore, in order to further improve the image quality after pulse reconstruction, if Levenberg-Marquart algorithm can be applied to the processing of digitized scintillation pulse signals acquired by MVT sampling, it will be the best fitting method which takes efficiency, accuracy, stability and other comprehensive factors into account, and can better meet the industrial needs.

EP 2 700 360 A1 discloses a method for extracting scintillation pulse information, especially the document discloses a computer-implemented method for fitting scintillation pulse digitized signals, comprising the following steps:

Step S1: Selecting a model as a scintillation pulse prior model and determining said model as a target function;

Step S2: Selecting sampling points for classical pulses in a scintillation pulse database, said sampling points including at least three voltage thresholds in sequence and three time points in sequence;

Step S3: storing said voltage thresholds in sequence as a voltage array v=[v1, v2, v3];

Step S4: setting four initial default parameters a, b, c and d of said target function to be 1, and storing them as an initial parameter array para=[1, 1, 1, 1];

Step S5: inputting said voltage array v, said time array t, number n of sampling points for classical pulses, said initial parameter array para,

Step S7: integrating said target function of said scintillation pulse with said fitting parameters having been determined after fitting to get an energy value of a k-th pulse;

Step S8: obtaining a zero-crossing point of a curve by solving an equation $V_k(t) = 0$, to obtain an arrival time of said k-th pulse and thus finishing extracting time and energy information of said pulse.

MCFEE J E ET AL: "Comparison of model fitting and gated integration for pulse shape discrimination and spectral estimation of digitized lanthanum halide scintillator pulses", NUCLEAR INSTRUMENTS & METHODS IN PHYSICS RESEARCH. SECTION A, vol. 828, 12 May 2016, pages 105-115, XP029572618, ISSN: 0168-9002, DOI: 10.1016/J.NIMA.2016.04.116 discloses a method of digitizing scintillation pulse signals.
DENG ZHENGZHOU ET AL: "Empirical Bayesian energy estimation for multi-voltage threshold digitizer in PET" 2013 IEEE NUCLEAR SCIENCE SYMPOSIUM AND MEDICAL IMAGING CONFERENCE (2013 NSS/MIC), IEEE, 27 October 2013, pages 1-5, XP032601158, DOI: 10.1109/NSSMIC.2013.6829196 discloses a further method of digitizing scintillation pulse signals.

## SUMMARY OF THE INVENTION

According to the claimed invention, there is provided a computer-implemented method for fitting digitized scintillation pulse signals so as to balance the efficiency, accuracy and stability.

Thus the present application provides a computer-implemented method for fitting digitized scintillation pulse signals, comprising the following steps:

Step S1: selecting a scintillation pulse prior model as a double-exponential model $V(t) = a \cdot e^{bt} + c \cdot e^{dt}$ and determining the double-exponential model as a target function;

Step S2: selecting sampling points for classical pulses in a scintillation pulse database, the sampling points including eight voltage thresholds sequence named as v1, v2, v3, v4, v5, v6, v7 and v8, and eight time points sequence named as t1, t2, t3, t4, t5, t6, t7 and t8;

Step S3: storing the voltage thresholds sequence as a voltage array v=[v1, v2, v3, v4, v5, v6, v7, v8], and carrying out time translation of a curve of the double-exponential model, the time translation comprising the following steps: setting a first time point t1 as 0, calculating the differences between the subsequent time points and t1 respectively, and then storing obtained data as a time array t=[0, (t2-t1), (t3-t1), (t4-t1), (t5-t1). (t6-t1). (t7-t1), (t8-t1)];

Step S4: setting four initial default parameters a, b, c and d of the target function to be 1, and storing them as an initial parameter array **para=[1,** 1, 1, 1];

Step S5: inputting data set including the voltage array v, the time array t, number n of sampling points for pulses, the initial parameter array **para,** and the target function V(t) into a Levenberg-Marquardt fitting function to fit and obtain four new fitting parameters a', b', c', d' which are stored as a second parameter array **paranew=[a',** b', c', d'];

Step S6: as for each scintillation pulse in the scintillation pulse database, except replacing the initial parameter array **para** by the second parameter array **paranew** in Step S4, repeating the step S1- step S5 in sequence until all of scintillation pulses have been fitted, and recording a fitted function of a k-th scintillation pulse as $V_k(t) = a_k \cdot e^{b_k t} + c_k \cdot e^{d_k t}$;

Step S7: integrating the target function $V_k(t)$ of the scintillation pulse which determine the fitting parameters after fitting, to get an energy value $E_k$ of a k-th pulse;

Step S8: obtaining a zero-crossing point of a curve by solving an equation $V_k(t) = 0$ , to obtain an arrival time of the k-th pulse $t_k = t1 + t_{k0}$, and thus finishing extracting time and energy information of the pulse.

The scintillation pulse prior model is acquired by a digital oscilloscope, and a curve of the scintillation pulse includes a sharp rising edge and a steady falling edge.

The scintillation pulse database is formed by a scintillation pulse acquisition platform which records digitalized scintillation pulses.

The scintillation pulse acquisition platform includes a pair of opposite scintillation detectors which are connected to the digital oscilloscope through a coaxial cable respectively and a radioactive source which is placed in the middle of an axial connection line of the pair of scintillation detectors.

The scintillation detector is a Si-BDM detector, and the radioactive source is a point-shaped 18FDG radioactive source.

The digital oscilloscope samples digitally with an analog bandwidth of 16 GHz and a sampling rate of 50 Gsps and records collected scintillation pulses.

The prototype of the Levenberg-Marquardt fitting function is **void lmcurve(int n_par, double *par, int m_dat, const double** *t, **const double** *y, **double(*f)(double t, const double** *par), **const lm_control_struct** *control, **lm_status_struct** *status), wherein **int n_par** represents a number of parameters of a model function to be fitted; **double * par** represents an initial value of a parameter; **int m_dat** represents a number of sampling points for fitting; **const double * t** represents an array of horizontal coordinates of the sampling points; **const double * y** represents an array of longitudinal coordinates of the sampling points; **double (* f) (double t, const double * par)** represents a curve model used as a basis of fitting; **const lm_control_struct\*control** represents control parameters of fitting algorithm, and **lm_status_struct\*status** represents state parameters of fitting algorithm.

The said data set of step S5 are set with data types including **double** for severs with good performance and high configuration and **float** otherwise.

A range for integration of the target function $V_k(t)$ is 0-200.

The zero-crossing point of a curve is represented as

$$t_{k0} = \left[ 1 / (d_k - b_k) * \ln(- a_k / c_k) \right].$$

The method for fitting digitized scintillation pulse signals provided by the present application uses Levenberg-Marquart method to perform non-linear fitting on the digitized scintillation pulse signals obtained by MVT method, chooses a double-exponential model and takes the parameters of the double-exponential model extracted from the existing pulse database as the initial value of the algorithm, which can greatly improve the calculation. At the same time, the algorithm itself is easy to be accelerated by openMP/GPU, and the time performance of the algorithm itself will gradually be improved with the updating of the computer. The method can not only improve the processing efficiency, but also ensure the accuracy and stability of information extraction. Therefore, the present application is the best fitting method under the composite factors of efficiency, accuracy and stability, etc.

## BRIEF DESCRIPTION OF THE DRAWINGS

These and other features and advantages of this application will become more apparent to those skilled in the art from the detailed description of preferred embodiment. The drawings that accompany the description are described below. Wherein,

Fig. 1 is a schematic view of a prior model of a pulse in the method for fitting digitized scintillation pulse signals according to the present application.

Fig. 2 is a layout diagram of a scintillation pulse acquisition platform according to an embodiment of the present application.

Fig. 3 is a schematic view of a classical scintillation pulse according to an embodiment of the present application.

Fig. 4 is an effect drawing according to an embodiment of the present application which uses the present method for fitting digitized scintillation pulse signals with a double-exponential model to PET signal processing.

Fig. 5 is an effect drawing of the energy resolution acquired by a linear exponential model according to the prior art.

## DESCRIPTION OF THE PREFERRED EMBODIMENTS

The followings are used to further illustrate the present application with specific embodiments. It should be understood that the following embodiments are only used to explain the present application but not to limit the scope of the present application.

The computer-implemented method for fitting digitized scintillation pulse signals provided by the present application comprises the following steps:

Step S1: selecting a scintillation pulse prior model as a double-exponential model $V(t) = a \cdot e^{bt} + c \cdot e^{dt}$ and determining the double-exponential model as a target function;

Step S2: selecting sampling points for classical pulses in a scintillation pulse database, the sampling points including eight voltage thresholds sequence named as v1, v2, v3, v4, v5, v6, v7 and v8 and eight time points sequence named as t1, t2, t3, t4, t5, t6, t7 and t8;

Step S3: storing the above voltage thresholds sequence as a voltage array v=[v1, v2, v3, v4, v5, v6, v7, v8], and carrying out time translation of a curve of the double-exponential model. The specific method of the time translation include: setting the first time point t1 as 0, calculating the differences between the subsequent time points and t1 respectively, and then storing the obtained data as a time array t=[0, (t2-t1), (t3-t1), (t4-t1), (t5-t1), (t6-t1). (t7-t1), (t8-t1)];

Step S4: selecting 1 as four initial default parameters a, b, c and d of the target function, and storing them as an initial parameter array **para=[1,** 1, 1, 1];

Step S5: inputting data set including the voltage array v, the time array t, the number n (n = 8) of sampling points for pulses, the initial parameter array **para,** and the target function V(t) into a fitting function **lmcurve,** setting corresponding parameters like data types, fitting speed, etc. as required to fit and obtain four new fitting parameters a', b', c', d' as an output result which are stored as the second parameter array **paranew=[a',** b', c', d'];

Step S6: as for a process of fitting multiple scintillation pulse data obtained in a practical application, except replacing the initial parameter array para by the second parameter array paranew in Step S4, processing other scintillation pulses by repeating said step S1- step S5 in sequence until all of scintillation pulses have been fitted, and recording the fitted function of the k-th scintillation pulse as $V_k(t) = a_k \cdot e^{b_k t} + c_k \cdot e^{d_k t}$ ;

Step S7: integrating the target function $V_k(t)$ of the scintillation pulse which determine the fitting parameters after fitting to get the energy value $E_k$ of the k-th pulse;

Step S8: obtaining the zero-crossing point (which is a negative number) of the curve by solving an equa-

tion $V_k(t) = 0$, to obtain the arrival time of the k-th pulse $t_k = t1 + t_{k0}$, and thus finishing extracting the time and energy information of the pulse.

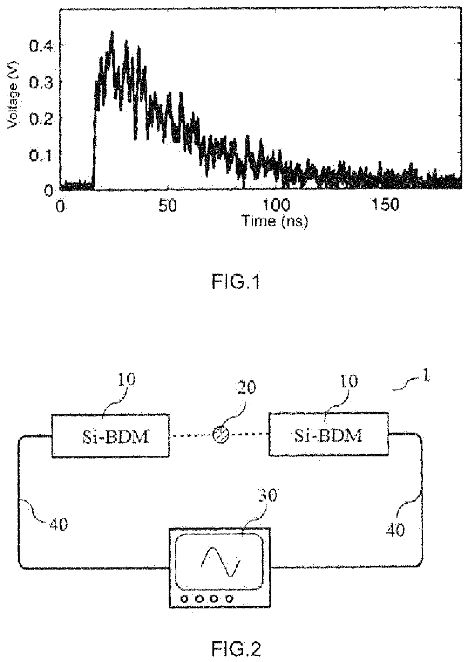

In the step S1 above, the scintillation pulse prior model is acquired by a digital oscilloscope. As shown in Fig. 2, the curve of the scintillation pulse of the prior model includes a sharp rising edge and a steady falling edge. The shape information of the scintillation pulse can be described by a linear exponential model and a double-exponential model. A double-exponential model is used in the present application to describe the scintillation pulse. Because the falling edge of scintillation pulse is very sharp, the double-exponential model can effectively improve the accuracy of time resolution calculation.

In the step S2 above, the scintillation pulse database is formed by a scintillation pulse acquisition platform which records digitalized scintillation pulses. Fig. 2 is a layout diagram of a scintillation pulse acquisition platform 1 according to an embodiment of the present application. The scintillation pulse acquisition platform 1 includes a pair of opposite scintillation detectors 10 and a radioactive source 20. In the embodiment of Fig. 2, the scintillation detector 10 is a Si-BDM detector, and the radioactive source 20 is a point-shaped 18FDG radioactive source which is placed in the middle of the axial connection line of a pair of scintillation detectors 10. The pair of scintillation detectors 10 are connected to the digital oscilloscope 30 through a coaxial cable 40 respectively, for example, by means that the coaxial cable 40 is connected to channel two and channel three of the digital oscilloscope respectively. The digital oscilloscope 30 samples digitally with an analog bandwidth of 16 GHz and a sampling rate of 50 Gsps and records the scintillation pulses collected through two channels, thus forming the scintillation pulse database.

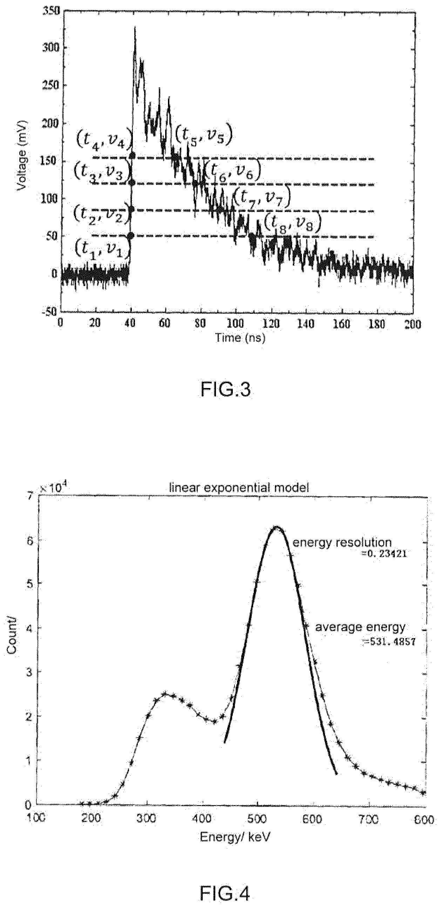

According to an embodiment of the present application, the settings for classical pulses and sampling points adopted in the above mentioned step S2 are shown in Fig. 3. Wherein eight voltage thresholds sequence are v1, v2, v3, v4, v5, v6, v7 and v8, and eight time points sequence are t1, t2, t3, t4, t5, t6, t7 and t8. The settings of specific values of voltage thresholds in Fig. 3 can be adjusted according to practical needs.

In the step S3 above, data storage can be realized by appropriate operating platforms and programming languages, such as C++ language.

In the step S5 above, the function prototype of Levenberg-Marquardt fitting algorithm is **void lmcurve(int n_par, double *par, int m_dat, const double *t, const double *y, double(*f)(double t, const double *par), const lm_control_struct *control, lm_status_struct *status)**. Among the parameters of the function prototype, **int n_par** represents the number of parameters of the model function to be fitted; **double * par** represents an initial value of a parameter; **int m_dat** represents the number of sampling points for fitting; **const double * t** represents an array of the horizontal coordinates of the sampling points; **const double * y** represents an array of the longitudinal coordinates of the sampling points; **double (* f) (double t, const double * par)** represents the curve model used as the basis of fitting; **const lm_control_struct*control** represents control parameters of the fitting algorithm, such as fitting speed, fault tolerance, etc., which are default values generally; and **lm_status_struct*status** represents state parameters of the fitting algorithm.

In the step S5 above, setting corresponding parameters like data types, fitting speed, etc. as required means that data types can be set as **double** for severs with good performance and high configuration and otherwise set as **float**, according to the number of scintillation pulses to be fitted and the memory configuration of a system server. At the same time, a control parameter **lm_control_struct*control** built in the fitting algorithm includes parameters such as fitting speed, step order, relative error of fitting, etc. These parameters can be all debugged according to the present system server, hardware configuration, etc. to achieve the purpose of improving efficiency and accuracy. For example, as for an embodiment of the present invention, data types can be set as double and other control parameters of the fitting algorithm can be set as default values.

In the step S7 above, the range for integration of $V_k(t)$ is 0-200.

In the step S8 above, solving an equation is to let $V_k(t) = a_k \cdot e^{bkt} + c_k \cdot e^{dkt} = 0$, and to obtain the value of the zero-crossing point of the curve

$$t_{k0} = \left[ 1 / \left( d_k - b_k \right) * \ln \left( - a_k / c_k \right) \right].$$

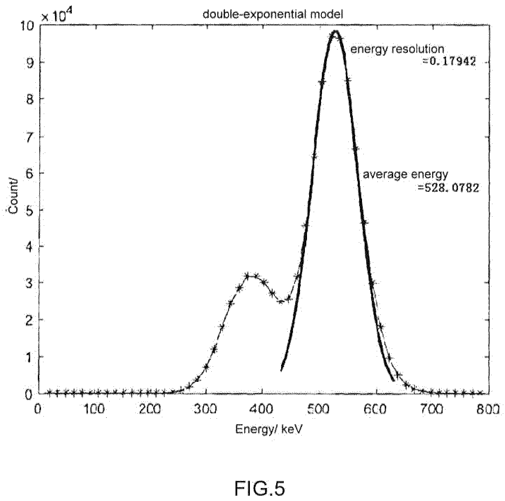

Fig. 4 is an energy resolution spectrum obtained after data processing on a scintillation pulse according to the present method. Fig. 5 is an effect drawing of the energy resolution acquired by a linear exponential model of the prior art. As can be seen by comparing Fig. 4 and Fig. 5, the energy resolution of the scintillation pulses is 17.9% obtained by a double-exponential model and 23.4% obtained by using a linear exponential model. It is obvious that the energy resolution obtained by the present invention has significantly enhanced, which is an obvious improvement for a digital PET system.

The present application obtains a scintillation pulse database based on a MVT method with four sampling points being obtained at the rising and falling edges of the pulse respectively by four voltage thresholds set in advance, namely, one pulse is represented by eight sampling points (time, voltage sequence). The running time of the algorithm can be greatly improved by using the double-exponential model's parameters extracted from an existing pulse database as the initial value of the fitting algorithm. Moreover, the method itself is easy to be accelerated by openMP/GPU. The method realizes the balance of stability and accuracy, and improves the efficiency and algorithm stability under the circumstances that the scintillation pulses of a double-exponential model are completely restored. Therefore the energy resolution of the PET system obtained by this method is greatly improved.

The foregoing application has been described in accordance with the relevant legal standard, thus the description is exemplary rather than limiting in nature. Variations and modifications to the disclosed embodiment may become apparent to those skilled in the art and do come within the scope of the application. Accordingly, the scope of legal protection afforded this application is as defined by the appended claims.

**Claims**

1. A computer-implemented method for fitting scintillation pulse digitized signals, comprising the following steps:

> Step S1: Selecting a double-exponential model $v(t) = a \cdot e^{bt} + c \cdot e^{dt}$ as a scintillation pulse prior model and determining said double-exponential model as a target function;
> Step S2: Selecting sampling points for classical pulses in a scintillation pulse database, said sampling points including eight voltage thresholds in sequence and eight time points in sequence, wherein said eight voltage thresholds in sequence are v1, v2, v3, v4, v5, v6, v7 and v8, and said eight time points in sequence are t1, t2, t3, t4, t5, t6, t7 and t8; said scintillation pulse database is obtained based on a MVT method;
> Step S3: storing said voltage thresholds in sequence as a voltage array v=[v1, v2, v3, v4, v5, v6, v7, v8], and carrying out time translation of a curve of said double-exponential model, said time translation comprising the following steps: setting a first time point t1 as 0, subtracting subsequent time points respectively by t1, and then storing obtained data as a time array t=[0, (t2-t1), (t3-t1), (t4-t1), (t5-t1), (t6-t1). (t7-t1), (t8-t1)];
> Step S4: setting four initial default parameters a, b, c and d of said target function to be 1, and storing them as an initial parameter array para=[1, 1, 1, 1];
> Step S5: inputting said voltage array v, said time array t, number n of sampling points for classical pulses, said initial parameter array para, and said target function V(t) into a Levenberg-Marquardt fitting function, and fitting to obtain four new fitting parameters a', b', c', d', and storing said four new fitting parameters as a second parameter array paranew=[a', b', c', d'];
> Step S6: as for each scintillation pulse in said scintillation pulse database, except replacing said initial parameter array **para** by said second parameter array **paranew** in Step S4, repeating said step S1- step S5 in sequence until all of scintillation pulses have been fitted, and recording a fitted function of a k-th scintillation pulse as $V_k(t) = a_k \cdot e^{b_k t} + c_k \cdot e^{d_k t}$;
> Step S7: integrating said target function $V_k(t)$ of said scintillation pulse with said fitting parameters having been determined after fitting to get an energy value $E_k$ of a k-th pulse;
> Step S8: obtaining a zero-crossing point of a curve by solving an equation $V_k(t) = 0$, obtaining an arrival time of said k-th pulse $t_k = t1 + t_{k0}$, and finishing extracting time and energy information of said pulse.

2. The computer-implemented method for fitting scintillation pulse digitized signals according to claim 1, wherein said scintillation pulse prior model is acquired by a digital oscilloscope, and a curve of said scintillation pulse prior model includes a sharp rising edge and a steady falling edge.

3. The computer-implemented method for fitting scintillation pulse digitized signals according to claim 2, wherein said scintillation pulse database is formed by a scintillation pulse acquisition platform which records digitalized scintillation pulses.

4. The computer-implemented method for fitting scintillation pulse digitized signals according to claim 3, wherein said scintillation pulse acquisition platform includes a pair of opposite scintillation detectors which are connected to said digital oscilloscope through a coaxial cable respectively and a radioactive source which is placed in the middle of an axial connection line of said pair of scintillation detectors.

5. The computer-implemented method for fitting scintillation pulse digitized signals according to claim 4, wherein said scintillation detector is a Si-BDM detector, and said radioactive source is a point-shaped 18FDG radioactive source.

6. The computer-implemented method for fitting scintillation pulse digitized signals according to claim 5, wherein said digital oscilloscope samples digitally with an analog bandwidth of 16 GHz and a sampling rate of 50 Gsps and records collected scintillation pulses.

7. The computer-implemented method for fitting scintillation pulse digitized signals according to claim 1, wherein a prototype of said Levenberg-Marquardt fitting function is **void lmcurve(int n_par, double \*par, int m_dat, const double \*t, const double \*y, double(\*f)(double t, const double \*par), const lm_control_struct \*control, lm_status_struct \*status),** wherein int **n_par** represents a number of parameters of a model function to be fitted; **double * par** represents an initial value of a parameter; **int m_dat** represents a number of sampling points for fitting; **const double * t** represents an array of horizontal coordinates of said sampling points; **const double * y** represents an array of longitudinal coordinates of said sampling points; **double (* f) (double t, const double * par)** represents a curve model used as a basis of fitting; **const lm_control_struct*control** represents control parameters of fitting algorithm, and **lm_status_struct*status** represents state parameters of fitting algorithm.

8. The computer-implemented method for fitting scintillation pulse digitized signals according to claim 1, wherein data types of step S5 include said voltage array **v,** said time array **t,** number n of sampling points for classical pulses, said initial parameter array **para,** and said target function V(t), said data types include double and float, which are set as double for severs with good performance and high configuration, and are otherwise set as float.

9. The computer-implemented method for fitting scintillation pulse digitized signals according to claim 1, wherein a range for integrating said target function $V_k(t)$ is 0-200.

10. The computer-implemented method for fitting scintillation pulse digitized signals according to claim 1, wherein said zero-crossing point of a curve is $t_{k0} = [1/(d_k - b_k) * 1n(- a_k/c_k)]$.


**Patentansprüche**

1. Computerimplementiertes Verfahren zum Anpassen von digitalisierten Szintillationsimpulssignalen, umfassend die folgenden Schritte:

Schritt S1: Auswählen eines doppelexponentiellen Modells $V(t) = a \cdot e^{bt} + c \cdot e^{dt}$ als ein vorheriges Szintillationsimpulsmodell und Bestimmen des doppelexponentiellen Modells als eine Zielfunktion;
Schritt S2: Auswählen von Abtastpunkten für klassische Impulse in einer Szintillationsimpulsdatenbank, wobei die Abtastpunkte acht Spannungsschwellenwerte nacheinander und acht Zeitpunkte nacheinander beinhalten, wobei die acht Spannungsschwellenwerte nacheinander v1, v2, v3, v4, v5, v6, v7 und v8 sind und die acht Zeitpunkte nacheinander t1, t2, t3, t4, t5, t6, t7 und t8 sind; wobei die Szintillationsimpulsdatenbank basierend auf einem MVT-Verfahren erhalten wird;
Schritt S3: Speichern der Spannungsschwellenwerte nacheinander als ein Spannungsarray v=[v1, v2, v3, v4, v5, v6, v7, v8] und Durchführen von Zeitverschiebung einer Kurve des doppelexponentiellen Modells, wobei die Zeitverschiebung die folgenden Schritte umfasst: Festlegen eines ersten Zeitpunktes t1 als 0, Subtrahieren von nachfolgenden Zeitpunkten jeweils um t1, und dann Speichern von erhaltenen Daten als ein Zeitarray t=[0, (t2-t1), (t3-t1), (t4-t1), (t5-t1), (t6-t1). (t7-t1), (t8-t1)];
Schritt S4: Festlegen von vier anfänglichen Standardparametern a, b, c und d der Zielfunktion auf 1, und Speichern dieser als ein anfängliches Parameterarray **para**=[1, 1, 1, 1];
Schritt S5: Eingeben des Spannungsarrays **v,** des Zeitarrays **t,** der Anzahl n an Abtastpunkten für klassische Impulse, des anfänglichen Parameterarrays **para** und der Zielfunktion V(t) in eine Levenberg-Marquardt-Anpassungsfunktion, und Anpassen, um vier neue Anpassungsparameter a', b', c', d' zu erhalten, und Speichern der vier neuen Anpassungsparameter als ein zweites Parameterarray **paranew=[a',** b', c', d'];
Schritt S6: wie für jeden Szintillationsimpuls in der Szintillationsimpulsdatenbank, außer Ersetzen des anfänglichen Parameterarrays **para** durch das zweite Parameterarray **paranew** in Schritt S4, Wiederholen von Schritt S1-Schritt S5 nacheinander, bis alle Szintillationsimpulse angepasst worden sind, und Aufzeichnen einer angepassten Funktion eines k-ten Szintillationsimpulses als $V_k(t) = a_k \cdot e^{bkt} + c_k \cdot e^{dkt}$;
Schritt S7: Integrieren der Zielfunktion $V_k(t)$ des Szintillationsimpulses mit den Anpassungsparametern, die nach dem Anpassen bestimmt worden sind, um einen Energiewert $E_k$ eines k-ten Impulses zu erhalten;
Schritt S8: Erhalten eines Nulldurchgangspunktes einer Kurve durch Lösen einer Gleichung $V_k(t) = 0$, Erhalten einer Ankunftszeit des k-ten Impulses $t_k = t1 + t_{k0}$ und Beenden der Extraktion von Zeit- und Energieinformationen des Impulses.

2. Computerimplementiertes Verfahren zum Anpassen von digitalisierten Szintillationsimpulssignalen nach Anspruch 1, wobei das vorherige Szintillationsimpulsmodell durch ein digitales Oszilloskop erfasst wird und eine Kurve des vorherigen Szintillationsimpulsmodells eine scharf ansteigende Kante und eine stetig abfallende Kante beinhaltet.

3. Computerimplementiertes Verfahren zum Anpassen von digitalisierten Szintillationsimpulssignalen nach Anspruch 2, wobei die Szintillationsimpulsdatenbank durch eine Szintillationsimpulserfassungsplattform gebildet wird, die digitalisierte Szintillationsimpulse aufzeichnet.

4. Computerimplementiertes Verfahren zum Anpassen von digitalisierten Szintillationsimpulssignalen nach Anspruch 3, wobei die Szintillationsimpulserfassungsplattform ein Paar gegenüberliegender Szintillationsdetektoren, die jeweils durch ein Koaxialkabel mit dem digitalen Oszilloskop verbunden sind, und eine radioaktive Quelle, die in der Mitte einer axialen Verbindungsleitung des Paares Szintillationsdetektoren platziert ist, beinhaltet.

5. Computerimplementiertes Verfahren zum Anpassen von digitalisierten Szintillationsimpulssignalen nach Anspruch 4, wobei der Szintillationsdetektor ein Si-BDM-Detektor ist und die radioaktive Quelle eine punktförmige radioaktive 18-FDG-Quelle ist.

6. Computerimplementiertes Verfahren zum Anpassen von digitalisierten Szintillationsimpulssignalen nach Anspruch 5, wobei das digitale Oszilloskop digital mit einer analogen Bandbreite von 16 GHz und einer Abtastrate von 50 Gsps abtastet und gesammelte Szintillationsimpulse aufzeichnet.

7. Computerimplementiertes Verfahren zum Anpassen von digitalisierten Szintillationsimpulssignalen nach Anspruch 1, wobei ein Prototyp der Levenberg-Marquardt-Anpassungsfunktion **void lmcurve(int n_par, double \*par, int m_dat, const double \*t, const double \*y, double(\*f)(double t, const double \*par), const lm_control_struct \*control, lm_status_struct \*status)** ist, wobei **int n_par** eine Anzahl an Parametern einer anzupassenden Modellfunktion darstellt; **double \* par** einen anfänglichen Wert eines Parameters darstellt; **int m_dat** eine Anzahl an Abtastpunkten zum Anpassen darstellt; **const double \* t** ein Array von horizontalen Koordinaten der Abtastpunkte darstellt; **const double \* y** ein Array von Längskoordinaten der Abtastpunkte darstellt; **double (\* f) (double t, const double \* par)** ein Kurvenmodell darstellt, das als Basis zur Anpassung verwendet wird; **const lm_control_struct\*control** Steuerparameter von Anpassungsalgorithmus darstellt, und **lm_status_struct\*status** Zustandsparameter von Anpassungsalgorithmus darstellt.

8. Computerimplementiertes Verfahren zum Anpassen von digitalisierten Szintillationsimpulssignalen nach Anspruch 1, wobei Datentypen von Schritt S5 das Spannungsarray **v,** das Zeitarray **t,** die Anzahl n an Abtastpunkten für klassische Impulse, das anfängliche Parameterarray **para** und die Zielfunktion V(t) beinhalten, wobei die Datentypen Double und Float beinhalten, die für Server mit guter Leistung und hoher Konfiguration als Double eingestellt sind und andernfalls als Float eingestellt sind.

9. Computerimplementiertes Verfahren zum Anpassen von digitalisierten Szintillationsimpulssignalen nach Anspruch 1, wobei ein Bereich zum Integrieren der Zielfunktion $V_k(t)$ 0-200 ist.

10. Computerimplementiertes Verfahren zum Anpassen von digitalisierten Szintillationsimpulssignalen nach Anspruch 1, wobei der Nulldurchgangspunkt einer Kurve $t_{k0}$ = [1/($d_k$ - $b_k$) * 1n(- $a_k$/$c_k$)].ist.

## Revendications

1. Procédé mis en oeuvre par ordinateur pour ajuster des signaux numérisés à impulsions de scintillation, ledit procédé comprenant les étapes suivantes:

étape S1: sélectionner un modèle exponentiel double V(t) = a · $e^{bt}$ + c · $e^{dt}$ comme modèle antérieur d'impulsion de scintillation et déterminer ledit modèle exponentiel double comme une fonction cible;

étape S2: sélectionner des points de prélèvement pour des impulsions classiques dans une base de données d'impulsions de scintillation, lesdits points de prélèvement comprenant dans l'ordre huit seuils de tension et dans l'ordre huit points temporels, procédé dans lequel lesdits huit seuils de tension sont dans l'ordre v1, v2, v3, v4, v5, v6, v7 et v8 et lesdits huit points temporels sont dans l'ordre t1, t2, t3, t4, t5, t6, t7 et t8; ladite base de données d'impulsions de scintillation est obtenue en se basant sur un procédé d'échantillonnage de seuils multi-tension - MVT;

étape S3: stocker lesdits seuils de tension qui se suivent comme un tableau de tensions v = [v1, v2, v3, v4, v5, v6, v7, v8] et effectuer une translation temporelle d'une courbe dudit modèle exponentiel double, ladite translation temporelle comprenant les étapes suivantes consistant: à définir un premier point temporel t1 comme étant égal à 0, à soustraire respectivement t1 des points temporels ultérieurs et à stocker ensuite les données obtenues comme un tableau de temps **t** = [0, (t2-t1), (t3-t1), (t4-t1), (t5-t1), (t6-t1), (t7-t1), (t8-t1);

étape S4: définir quatre paramètres initiaux par défaut a, b, c et d de ladite fonction cible, lesdits paramètres devant être réglés sur 1, et les stocker comme un tableau de paramètres initiaux **para** = [1, 1, 1, 1];

étape S5: entrer ledit tableau de tensions **v,** ledit tableau de temps **t,** le nombre n de points de prélèvement pour des impulsions classiques, ledit tableau de paramètres initiaux **para** et ladite fonction cible V(t) dans une fonction d'ajustement de Levenberg-Marquardt, et ajuster pour obtenir quatre nouveaux paramètres d'ajustement a', b', c', d' et stocker lesdits quatre nouveaux paramètres d'ajustement comme un deuxième tableau de paramètres **paranew** = [a', b', c', d'];

étape S6: comme pour chaque impulsion de scintillation dans ladite base de données d'impulsions de scintillation, le procédé consiste - à l'exception du fait de remplacer, dans l'étape S4, ledit tableau de paramètres initiaux **para** par ledit deuxième tableau de paramètres **paranew** - à répéter les étapes l'une après l'autre en allant de ladite étape S1 à l'étape S5, jusqu'à ce que toutes les impulsions de scintillation aient été ajustées, et ledit procédé consiste à enregistrer une fonction ajustée d'une énième impulsion de scintillation k comme étant $V_k(t) = a_k \cdot e^{b_k t} + c_k \cdot e^{d_k t}$;

étape S7: intégrer ladite fonction cible $V_k(t)$ de ladite impulsion de scintillation avec lesdits paramètres d'ajustement ayant été déterminés après ajustement pour obtenir une valeur d'énergie $E_k$ d'une énième impulsion k;

étape S8: obtenir un point de passage par zéro d'une courbe, en résolvant une équation $V_k(t) = 0$, obtenir un temps d'arrivée de ladite énième impulsion k, ledit temps d'arrivée étant $t_k = t1 + t_{k0}$, et terminer le fait d'extraire les informations de temps et d'énergie de ladite impulsion.

2. Procédé mis en oeuvre par ordinateur pour ajuster des signaux numérisés à impulsions de scintillation selon la revendication 1, procédé dans lequel ledit modèle antérieur d'impulsion de scintillation est acquis par un oscilloscope numérique, et une courbe dudit modèle antérieur d'impulsion de scintillation comprend un front montant à pente raide et un front descendant constant.

3. Procédé mis en oeuvre par ordinateur pour ajuster des signaux numérisés à impulsions de scintillation selon la revendication 2, procédé dans lequel ladite base de données d'impulsions de scintillation est formée par une plateforme d'acquisition d'impulsions de scintillation, ladite plateforme enregistrant des impulsions de scintillation numérisées.

4. Procédé mis en oeuvre par ordinateur pour ajuster des signaux numérisés à impulsions de scintillation selon la revendication 3, procédé dans lequel ladite plateforme d'acquisition d'impulsions de scintillation comprend une paire de détecteurs de scintillation opposés, lesdits détecteurs étant connectés respectivement audit oscilloscope numérique au moyen d'un câble coaxial et connectés à une source radioactive qui est placée au milieu d'une ligne de connexion axiale de ladite paire de détecteurs de scintillation.

5. Procédé mis en oeuvre par ordinateur pour ajuster des signaux numérisés à impulsions de scintillation selon la revendication 4, procédé dans lequel ledit détecteur de scintillation est un détecteur Si-BDM, et ladite source radioactive est une source radioactive 18FDG en forme de pointe.

6. Procédé mis en oeuvre par ordinateur pour ajuster des signaux numérisés à impulsions de scintillation selon la revendication 5, procédé dans lequel ledit oscilloscope numérique échantillonne numériquement avec une bande passante analogique de 16 GHz et avec une fréquence d'échantillonnage de 50 Gsps, et ledit oscilloscope numérique enregistre les impulsions de scintillation ayant été collectées.

7. Procédé mis en oeuvre par ordinateur pour ajuster des signaux numérisés à impulsions de scintillation selon la revendication 1, procédé dans lequel un prototype de ladite fonction d'ajustement de Levenberg-Marquardt est **void lmcurve(int n_par, double *par, int m_dat, const double *t, const double *y, double(*f) (double t, const double *par), const lm_control_struct *control, lm_status_struct*status),** fonction d'ajustement dans laquelle **int n_par** représente un certain nombre de paramètres d'une fonction modèle devant être ajustée; **double *par** représente une valeur initiale d'un paramètre; **int m_dat** représente un certain nombre de points de prélèvement pour l'ajustement; **const double *t** représente un tableau de coordonnées horizontales desdits points de prélèvement; **const double *y** représente un tableau de coordonnées longitudinales desdits points de prélèvement; **double(*f) (double t, const double *par)** représente un modèle de courbe utilisé comme base d'ajustement; **const lm_control_struct*control** représente des paramètres de contrôle d'un algorithme d'ajustement, et **lm_status_struct*status** représente des paramètres d'état d'un algorithme d'ajustement.

8. Procédé mis en oeuvre par ordinateur pour ajuster des signaux numérisés à impulsions de scintillation selon la revendication 1, procédé dans lequel des types de données de l'étape S5 comprennent ledit tableau de tensions **v,** ledit tableau de temps **t,** le nombre n de points de prélèvement pour des impulsions classiques, ledit tableau de paramètres initiaux **para** et ladite fonction cible V(t), lesdits types de données, qui comprennent des types doubles et flottants, sont définis comme doubles pour des serveurs ayant de bonnes performances et une configuration élevée et, sinon, sont définis comme flottants.

9. Procédé mis en oeuvre par ordinateur pour ajuster des signaux numérisés à impulsions de scintillation selon la revendication 1, procédé dans lequel une plage pour intégrer ladite fonction cible $V_k(t)$ est com-

prise entre 0 et 200.

10. Procédé mis en oeuvre par ordinateur pour ajuster des signaux numérisés à impulsions de scintillation selon la revendication 1, procédé dans lequel ledit point de passage par zéro d'une courbe est $t_{k0} = [1/(d_k - b_k) * 1n(- a_k/c_k)]$.

FIG.1

FIG.2

FIG.3

FIG.4

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2700360 A1

**Non-patent literature cited in the description**

- **MCFEE J E et al.** Comparison of model fitting and gated integration for pulse shape discrimination and spectral estimation of digitized lanthanum halide scintillator pulses. *NUCLEAR INSTRUMENTS & METHODS IN PHYSICS RESEARCH. SECTION A,* 12 May 2016, vol. 828, ISSN 0168-9002, 105-115

- Empirical Bayesian energy estimation for multi-voltage threshold digitizer in PET. **DENG ZHENGZHOU et al.** 2013 IEEE NUCLEAR SCIENCE SYMPOSIUM AND MEDICAL IMAGING CONFERENCE (2013 NSS/MIC). IEEE, 27 October 2013, 1-5